# EUROPEAN PATENT APPLICATION

(11) **EP 4 692 534 A1**
(43) Date of publication of application: **11.02.2026**
(21) Application number: 23934323.9
(22) Date of filing: 25.04.2023
(51) Int. Cl.: F02M 27/02, B01J 23/755, B01J 29/82, B01J 37/00, C01B 3/38, C01B 3/50

(54) **APPARATUS FOR APPLICATIONS IN AUTOMOTIVE AND ELECTRIC VEHICLES FOR GENERATING HYDROGEN IN REAL TIME BY MEANS OF VAPOR CATALYTIC REFORMING OF ETHANOL**

(71) Applicant: Delphys Partners S/A, 01451-000 São Paulo (BR)
(72) Inventor: TARCÍSIO DE OLIVEIRA, Lupércio, Anchieta Belo Horizonte (BR); NICODEMOS DA SILVA, Sidney, Anchieta Belo Horizonte (BR)
(74) Representative: Lorente Berges, Ana
(86) International application number: PCT/BR2023/050129
(87) International publication number: WO 2024/221065

(57) **Abstract**

The present invention relates to an "APPARATUS FOR REAL-TIME HYDROGEN GENERATION IN AUTOMOTIVE AND ELECTRIC VEHICLE APPLICATIONS THROUGH STEAM CATALYTIC REFORMING OF ETHANOL", which is designed to significantly reduce pollutant emissions in the automotive sector. This technology introduces improvements that positively impact both the environment and the economy using a more efficient energy source. In this context, hydrogen (H₂) produced in real time for use in passenger vehicles can be derived from renewable energy sources, especially ethanol. The apparatus consists of two interconnected chambers: in the first, the injected fuels undergo preheating and are then transferred to the second chamber. In this second chamber, under standardized temperatures ranging from 573 K to 873 K and water-to-ethanol molar ratios of up to 18:1, molecular catalytic reforming occurs, generating hydrogen and other reformate products via reaction with high-surface-area doped calcium phosphate catalysts.

## Description

The present patent relates to a device for on-demand generation of green hydrogen (H₂V) gas, produced in real time via steam catalytic reforming of an ethanol/water mixture, intended for application in internal combustion engines (Otto and/or Diesel cycle) or in polymer electrolyte membrane (PEM) fuel cells for use in automotive and electric vehicles. The catalytic reforming process occurs through thermochemical reactions leading to hydrogen (H₂) production from organic compounds (e.g., hydrocarbons, alcohols) and/or water molecules, by dehydrogenation of these inputs using calcium phosphate-based catalysts doped with nickel (Ni) and optionally other metals (e.g., cobalt, platinum-group elements, rare earth elements). The reaction takes place at a temperature of approximately 773 K, resulting in the conversion of ethanol and water into hydrogen to supply the engines or PEM fuel cells.

### Background

The widespread use of fossil fuels for energy production has been one of the main sources of atmospheric pollutant emissions. The transportation sector accounts for over 25% of global CO₂ emissions, with automobiles representing the primary contributors. According to data from the United Nations Environment Programme (UNEP) in 2019, the global increase in car usage was responsible for approximately 60% of the rise in carbon dioxide emissions worldwide.

The harmful effects of these emissions are highly significant. The rise in global temperatures, for instance, leads to climate change phenomena such as sea level rise, increased storm intensity, decreased agricultural productivity, and a higher incidence of respiratory diseases. Furthermore, the emission of pollutant gases also results in socioeconomic impacts, including increased healthcare costs, reduced tourism revenue, and a decline in quality of life in urban areas.

These are merely a few examples of the issues arising from the unsustainable use of fossil fuels. In addition, the progressive depletion of these resources further underscores the urgency of shifting the current energy paradigm-an imperative that can and should be addressed through the development of decarbonization technologies combined with a transition in the global energy matrix, particularly as applied to automotive vehicles.

In this context, hydrogen has emerged as one of the most promising alternatives for decarbonizing the mobility sector, given that its post-combustion byproduct is water and its energy efficiency surpasses that of hydrocarbons. To date, the production and use of hydrogen as a fuel for automotive applications have followed two main pathways: one involves the direct injection of fuel into conventional internal combustion engines, while the other entails storage in fuel cells or porous membranes for energy generation following a catalytic and/or electrochemical reforming process.

Notably, as it is based on the premise of decarbonization, the origin and production of hydrogen as a fuel must be grounded in a clean, renewable, and sustainable economy, with the objective of replacing fossil fuels. There are existing classification systems designed to trace the source of this fuel, such as the color-based classification, which, in simplified terms, considers the following conditions:
- Green: Green hydrogen is produced from renewable energy sources such as wind, solar, biomass, or hydropower. It is considered the "cleanest" form of hydrogen, as it does not release carbon dioxide (CO₂) into the atmosphere.
- Blue: Blue hydrogen is produced from fossil fuels such as natural gas, coal, or petroleum, but the resulting carbon dioxide (CO₂) emissions are captured before being released into the atmosphere. It is considered somewhat less clean than green hydrogen, as it still results in CO₂ emissions, albeit in reduced amounts.
- White: white hydrogen is produced from fossil fuels such as natural gas, coal, or petroleum, with no carbon capture. It is considered the least clean form of hydrogen, as it emits large amounts of carbon dioxide (CO₂) into the atmosphere.

Catalytic reforming is considered one of the most efficient methods for generating green hydrogen. It is a chemical process used to produce hydrogen from liquid fuels such as methanol, ethanol, isopropanol, or natural gas. In this process, a catalyst is employed to break the chemical bonds of the fuel molecules, thereby releasing hydrogen and other byproducts. The resulting hydrogen is classified as "green" because it is derived from renewable, non-fossil sources.

Currently, catalytic reforming of alcohols has proven to outperform other methods. This process can even be applied in automotive fuel injection systems to enhance engine efficiency and reduce emissions. It involves the use of catalysts to convert alcohols, such as ethanol and methanol, into simpler molecules and combustible gases. This process is environmentally beneficial and enables the use of a wider variety of fuels while simultaneously reducing pollutant emissions.

In this context, various technologies currently exist in the state of the art to produce green hydrogen as a fuel for automotive applications, including those based on the catalytic reforming of organic compounds. However, the technologies identified to date differ significantly from the present invention in terms of efficiency, methods, and mechanisms for H₂V production, as well as in the equipment and devices used for fuel injection. This premise is substantiated by the description below of the closest prior art identified in relation to the technology claimed herein.

GB2518132A discloses a hydrogen generator for use with an internal combustion engine, in which hydrogen is generated through the electrolysis of water or potassium hydroxide. The device comprises a sealed container that houses the electrolyte and a plurality of cathodes and anodes. The anode is preferably made of titanium, which is then coated with platinum oxide or a mixture of metal oxides. The cathode is made of pure titanium. Both the anode and the cathode are preferably formed as threaded rods.

US2020189911A1 discloses hydrogen generation systems and methods of use thereof. More specifically, hydrogen is generated on demand by injecting a liquid feedstock into a solid aluminum alloy containing a catalyst. The hydrogen may then be stored or used as fuel for various types of energy conversion, such as internal combustion engines or fuel cells. The hydrogen generation reaction oxidizes the alloy into alumina, which may be recycled back into the original alloy using conventional smelting methods.

CN114079075A discloses a system comprising a plurality of fuel cell stacks, wherein each fuel cell stack consists of multiple fuel cells; in which hydrogen is generated via an oxidative process and subsequently injected into automotive vehicles.

In principle, the theoretical efficiency of reformers depends on the atomic hydrogen-to-carbon ratio and the heat of reaction for each fuel. In the case of ethanol, the theoretical conversion efficiency is approximately 95% within the optimal temperature range for steam reforming, which spans from 673 K to 823 K. Such conditions were not observed in any of the cited inventions.

Moreover, hydrogen production generally occurs in two main steps: steam reforming reactions (SRR), which take place at moderately high temperatures (around 773 K), and water-gas shift reactions (WGSR), which occur at slightly lower temperatures. Once again, in competing products, such parameters aimed at improving the efficiency of the catalytic reforming system for green hydrogen production were not given due consideration. For demonstration purposes, the global steam reforming reaction of ethanol is presented in Equation 1 below:

C₂H₅OH(v) + H₂O(v) → 2CO₂ +6H₂ (1)

The steam reforming reaction (SRR), in turn, occurs as indicated in Equation 2:

C₂H₅OH(v) + H₂O(v) → 2CO+ 4H₂ (2)

The water-gas shift reaction (WGSR), in turn, occurs as indicated in Equation 3:

2CO(g) + 2H₂O(v) → 2CO₂ + 2H₂ (3)

Another critical aspect is that the catalytic reforming processes of ethanol and water, as described, are optimized using calcium phosphate-based catalysts, preferably nickel-doped hydroxyapatite. This feature is specifically claimed in the present patent application.

It is also important to note that certain side reactions may occur concurrently during the steam reforming process, such as the formation of methane and carbon, as exemplified below. Accordingly, system adjustments are necessary to minimize these reactions: methanation - CO + 3H₂ → CH₄ + H₂O, and the Boudouard reaction - 2CO → CO₂ + C(s).

### Brief Description of the Objectives:

In view of the foregoing, the present patent was developed with the objective of optimizing the steam reforming of ethanol (or other alcohols) for applications in internal combustion engines or electric vehicles equipped with fuel cells (preferably PEM cells). This optimization is achieved through the design and dimensioning of the apparatus and the definition of its operational parameters-such as catalyst type, water/ethanol ratio, temperature, pressure, and mass or volumetric flow rate-that govern the real-time generation of hydrogen via steam reforming. The details of the apparatus and its functionalities may be better understood from the following detailed description, in conjunction with the accompanying figures, in which:

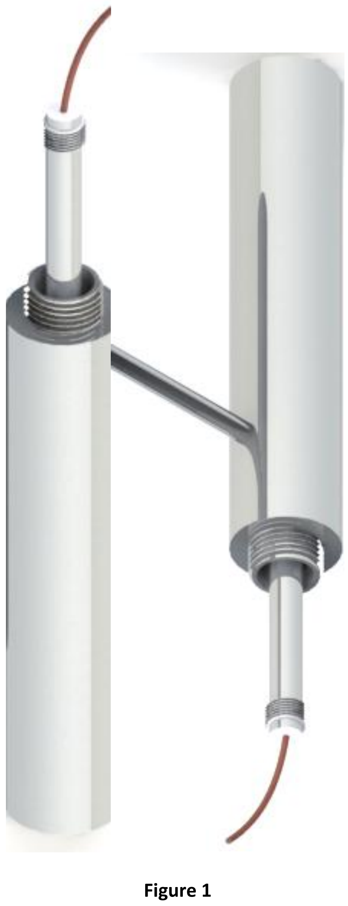

**Figure 1** is a schematic isometric view of the APPARATUS FOR REAL-TIME HYDROGEN GENERATION IN AUTOMOTIVE AND ELECTRIC VEHICLE APPLICATIONS, identifying the following components: preheating chamber (C1), movable heating element 1 (R1), catalytic reforming chamber (C2), movable heating element 2 (R2), and the interchamber connection tube (IT). The entire apparatus is connected to a programmable logic controller (PLC) for temperature and flow control.

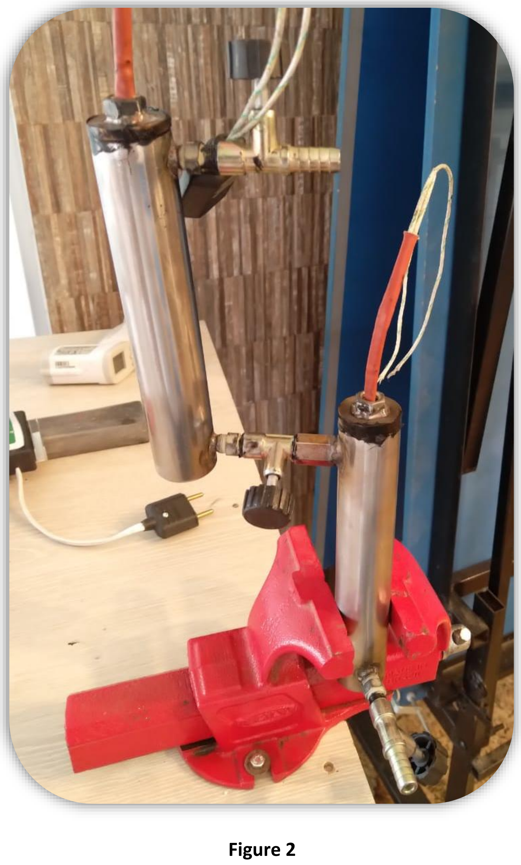

**Figure 2** shows an image of a developed prototype of the apparatus for hydrogen generation through the catalytic reforming of ethanol.

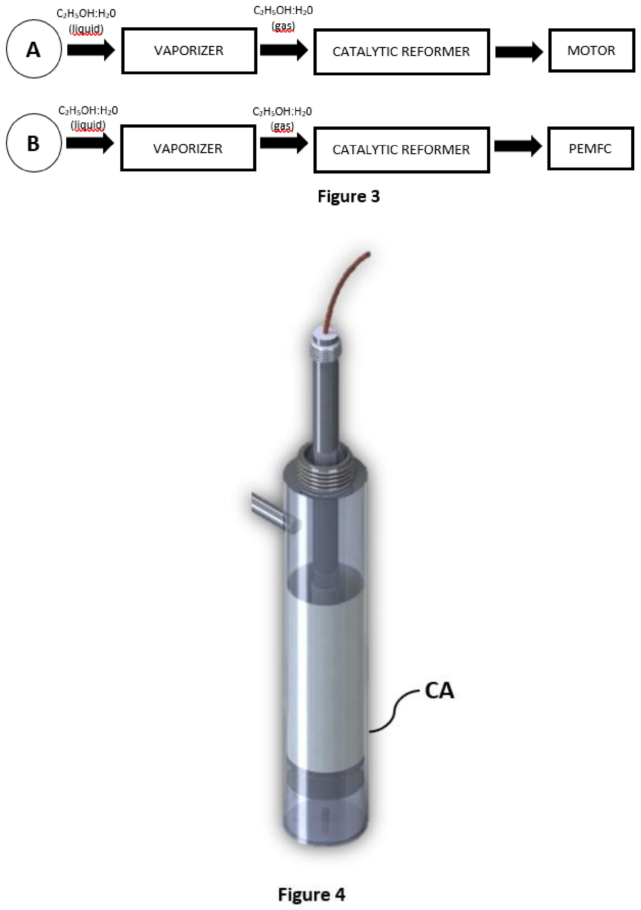

**Figure 3** illustrates the flow scheme for the catalytic reforming of ethanol in the claimed apparatus, depicting two possible applications: supplying a combustion engine - Path A - or a hydrogen fuel cell (PEMFC) - Path B.
**Figure 4** presents an internal view of the reforming chamber (CE), highlighting the region (CA) where the calcium phosphate catalyst is positioned.

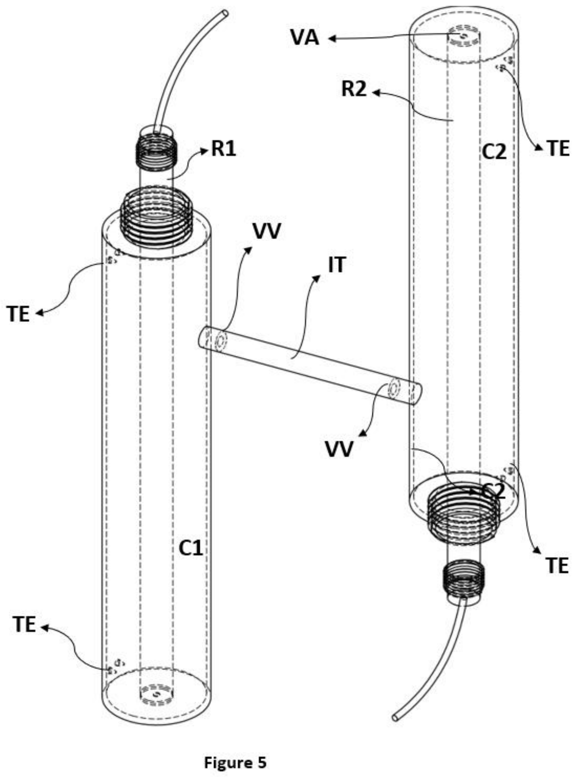

**Figure 5** is another schematic representation of the apparatus, this time with transparent external walls, identifying the following elements: preheating chamber (C1), movable heating element 1 (R1), catalytic reforming chamber (C2), movable heating element 2 (R2), interchamber connection tube (IT), thermostats (TE), pressure and flow control valve (V), and flame arrestor valve (VA).

### Description of the Invention:

As previously described, the present technology enables real-time production of hydrogen (H₂) through the steam catalytic reforming of water and ethanol for use in automotive and electric vehicles. To achieve this production, a device comprising two interconnected chambers, arranged in an inverted configuration relative to each other, is required. In the first chamber (C1), the injected fuels are preheated and subsequently transferred to the second chamber (C2). In this second chamber, the temperature is regulated by a programmable logic controller (PLC), and molecular catalytic reforming takes place, generating hydrogen through reactions with high-surface-area calcium phosphate catalysts.

Data transmission and control of operational parameters-such as temperature, pressure, and flow-are performed via a pre-programmed SetPoint in a programmable logic controller (PLC), or alternatively through the vehicle's onboard control unit. Thermostats located in chambers C1 and C2 monitor the temperature, while the valves (VV) positioned in the connection tube (IT) detect pressure and flow. Based on the pre-configured SetPoint, the PLC will either release or retain the stored reactants and products. In chamber C2, from which the gaseous hydrogen is extracted for combustion, a flame arrestor valve (VA) is also present to provide fire safety. Heating in chamber C1 is preferably achieved by a movable heating element (R1), which can be easily coupled to the structure. In chamber C2, an additional movable heating element (R2) may be installed to maintain the optimal temperature. This chamber also contains the catalytic materials-calcium phosphate or apatite-based catalysts-for the catalytic reforming of ethanol. These catalysts are arranged in region CA and may or may not be doped with transition metals. A preferred embodiment includes nickel (Ni)-doped hydroxyapatite, although doping with cobalt (Co) or nickel-manganese (Ni-Mn) is also possible, with a concentration c in the range of 0.5 < c < 5.0 (w/w), and preferably between 1% and 2% (w/w).

The conditioning of the catalysts is essential in the process of converting liquid and gaseous fuels into hydrogen, as they are responsible for accelerating or optimizing the chemical reactions, with each catalyst exhibiting distinct mechanisms of action.

In fact, the physicochemical and morphological characteristics of the catalyst directly influence the hydrogen production rate as well as the economic and environmental aspects of largescale H₂ generation. Previous studies have demonstrated that calcium phosphate-based catalysts-preferably hydroxyapatite-doped with nickel (Ni) are more suitable for the steam reforming of ethanol. However, automotive catalysts supported on alumina and/or cerium/zirconium (Ce/Zr) are commonly used with dopants such as rhodium (Rh), palladium (Pd), and/or platinum (Pt). In general, Pt presents high cost, which limits its widespread application.

One of the key concepts considered in the development of any catalytic device is selectivity, which represents the ratio between the desired reaction product and the amount of reactant consumed. This is critical because it is common for the reactant to follow competing reaction pathways, forming undesired byproducts and leading to economic losses, as not all the reactant is converted into the intended product. In the context of steam reforming, hydrogen selectivity decreases in the following order: cobalt (Co), nickel (Ni), rhodium (Rh), platinum (Pt), ruthenium (Ru), and copper (Cu). Among these, nickel is a non-expensive, sufficiently active metal with high surface area, which explains its widespread use. Both Ni and Co have shown the highest hydrogen yields in the steam reforming of ethanol. Catalyst support selection is essential and directly affects catalytic activity; therefore, the diffusion of nickel into the calcium phosphate matrix is critical to the process. In addition to calcium phosphate, other promising supports for Ni and Co catalysts include oxides of magnesium, zinc, cerium, lanthanum, and aluminum.

Moreover, our studies have shown that calcium phosphate catalysts-preferably hydroxyapatite-prepared with noble metals (Rh, Ru, and Pd) and non-noble metals (Ni, Co, Cu, and rare earth elements) exhibited hydrogen selectivity above 85%. The use of calcium phosphate (hydroxyapatite) doped with Ni, Co, or a combination of Ni/Co in the steam reforming of ethanol plays a critical role in optimizing the metal-support interaction to achieve high efficiency. Preliminary results indicated that nickel was the most effective support in terms of ethanol conversion and hydrogen production when compared to other metallic dopants. Ethanol conversion efficiency reached up to 95% at temperatures around 500°C. Therefore, although the apparatus preferably utilizes Ni-based catalysts, other dopant options are not excluded.

Furthermore, the formation of acetaldehyde and acetone was not observed at any temperature, indicating a high catalytic conversion efficiency. Increasing the temperature led to a rise in hydrogen concentration while simultaneously reducing the concentrations of carbon dioxide (CO₂) and methane (CH₄), thus enabling both the technical and economic feasibility of an ethanol reformer for hydrogen production intended to supply an internal combustion engine (Otto or Diesel cycle) or a fuel cell system.

Technical analysis also demonstrated that the optimal conditions for the steam reforming of ethanol occur at temperatures above approximately 350°C and at a relative pressure below 1 atm. A temperature range between 450°C and 550°C is therefore recommended, as process efficiency tends to stabilize beyond this range, while operational costs increase.

As an example, empirical performance studies using catalysts based on a porous hydroxyapatite matrix (with high surface area) doped with Ni were conducted using gas chromatography methods. To generate approximately 1.0 Nm³/h of hydrogen, an ethanol flow rate of approximately 0.05 m³/h was required. The technology was validated under relevant environmental conditions through the fabrication of apparatus prototypes for the steam reforming process, using nickel and cobalt/nickel catalysts supported on hydroxyapatite and/or calcium phosphates. The tests were performed at temperatures ranging from 350°C to 550°C, with water-to-ethanol molar ratios of up to 18:1.

Comparative experimental studies were also conducted using diesel and gasoline in the reforming process, considering different pressure and engine speed scenarios. The objective was to determine the optimal parameters for reducing smoke emissions (unburned hydrocarbons, carbon monoxide - CO, polycyclic aromatic hydrocarbons - PAHs, and/or particulate matter - PM), as well as nitrogen oxides (NOₓ), in a diesel engine operating with EGR (Exhaust Gas Recirculation). For this purpose, the apparatus was fed with exhaust gas, diesel fuel, and water. The products generated by the reforming process consisted primarily of hydrogen, carbon monoxide, and unburned hydrocarbons, with the maximum hydrogen concentration reaching approximately 25%. The results showed reductions in smoke, NOₓ, and fuel consumption, along with improved engine efficiency. However, to further increase the hydrogen concentration, a secondary reactor is required to promote the reaction between carbon monoxide and water, producing carbon dioxide and hydrogen. Additionally, the results indicated that increasing the compression ratio and operating under lean-burn conditions represents a promising approach for the use of hydrated ethanol as well.

Regarding its application in vehicles, the proposed technology is integrated into the engine's fuel supply line, upstream of the fuel rail. Specifically, it involves two tubes installed prior to the fuel rail on the intake manifold. The function of the apparatus is to supply the fuel rail with the reformate-composed predominantly of hydrogen (H₂)-which, together with the rail and the injector valves, serves to distribute pressurized fuel to the combustion chambers. Experimental results showed hydrogen concentrations ranging from approximately 85% to 95% in the gases exiting the reformer across all studied temperatures. As previously mentioned, the optimal temperature range for hydrogen production was between 450°C and 550°C.

Finally, it is reiterated that the present invention offers high efficiency, cost-effectiveness, safety, and logistical ease with respect to the use of ethanol and other components. Furthermore, the apparatus allows for dimensional adjustments and structural modifications. Accordingly, the present specification should not be construed as limiting, but rather as illustrative, recognizing that variations in design may be implemented by those skilled in the art without departing from the scope of protection of the invention.

## Claims

1. **An apparatus** for real-time hydrogen generation in automotive and electric vehicle applications through steam catalytic reforming of ethanol, the apparatus comprising: two interconnected chambers arranged in an inverted configuration relative to one another; wherein a first chamber (C1) is configured to heat injected fuel mixtures to temperatures between 450°c and 550°c under pressures up to 1 atm, forming vapors; wherein a second chamber (C2) receives the vapors from the first chamber and contains a catalytic region (CA) with calcium phosphate catalysts, such that upon contact, catalytic reforming occurs with a conversion efficiency of up to 95%, resulting in the on-demand generation of hydrogen gas (H_{z}).

2. An apparatus for real-time hydrogen generation in automotive and electric vehicle applications through steam catalytic reforming of ethanol, according to claim 1, wherein the second chamber (C2) further comprises a movable heating element (R2) configured to provide additional heating and/or to maintain the temperature of the alcohol vapors during the reforming process, and wherein a flame arrestor valve (VA) is positioned at the hydrogen gas outlet of the second chamber, the outlet being operatively connected to the fuel rail of the intake manifold of the internal combustion engine.

3. An apparatus for real-time hydrogen generation in automotive and electric vehicle applications through steam catalytic reforming of ethanol, according to claims 1 and 2, wherein the apparatus comprises an embedded programmable logic controller (PLC) configured to control and maintain optimal temperature parameters via thermostats (TE) positioned in chambers C1 and C2, and wherein the PLC is further configured to monitor and regulate the pressure and flow rate of the vapors through pressure and flow control valves (VV) located in the interconnection tube (IT) between the chambers.

4. An apparatus for real-time hydrogen generation in automotive and electric vehicle applications through steam catalytic reforming of ethanol, according to claim 1, wherein the catalytic region (CA) comprises porous calcium phosphate spheres, preferably hydroxyapatite, having particle diameters selected from the ranges of 0.5 < x < 1.0 mm, 1.0 < x < 2.0 mm, and 2.0 < x < 4.0 mm, and more preferably between 1.0 mm and 2.0 mm, wherein said calcium phosphate catalysts may be doped with transition metals, preferably nickel (Ni), and optionally cobalt (Co) or nickel-manganese (Ni-Mn),wherein the doping concentration (c) ranges from 0.5 < c < 5.0% (w/w), and is more preferably between 1% and 2% (w/w).

5. An apparatus for real-time hydrogen generation in automotive and electric vehicle applications through steam catalytic reforming of ethanol, according to claim 1, wherein the second chamber (C2) comprises a movable heating element (R2) configured to provide additional heating and/or to maintain the temperature of the alcohol vapors, and wherein a flame arrestor valve (VA) is positioned at the hydrogen outlet of the second chamber, the outlet being configured to supply a proton exchange membrane fuel cell (PEMFC) that generates an electrical current on demand, said current being subsequently delivered to power the vehicle's electric motors.
